Europäisches Patentamt

European Patent Office

Office européen des brevets

(11) Publication number: **0 040 531**
**B1**

(12) **EUROPEAN PATENT SPECIFICATION**

(45) Date of publication of patent specification: **06.02.85**

(21) Application number: **81302181.3**

(22) Date of filing: **18.05.81**

(51) Int. Cl.⁴: **F 16 F 1/18, B 60 G 11/02**

(54) Leaf spring and leaf therefor.

| | |
|---|---|
| (30) Priority: **16.05.80 US 150548**<br>**16.05.80 US 150547** | (73) Proprietor: **FORD MOTOR COMPANY LIMITED**<br>**Eagle Way**<br>**Brentwood Essex CM13 3BW (GB)**<br>㊱ **GB** |
| (43) Date of publication of application:<br>**25.11.81 Bulletin 81/47** | (73) Proprietor: **FORD-WERKE**<br>**AKTIENGESELLSCHAFT**<br>**Ottoplatz 2 Postfach 21 03 69**<br>**D-5000 Köln 21 (DE)**<br>㊱ **DE** |
| (45) Publication of the grant of the patent:<br>**06.02.85 Bulletin 85/06** | (73) Proprietor: **FORD FRANCE SOCIETE ANONYME**<br>**344 Avenue Napoléon Bonaparte B.P. 307**<br>**F-92506 Rueil Malmaison Cedex (FR)**<br>㊱ **FR** |
| (84) Designated Contracting States:<br>**DE FR GB IT** | |
| (56) References cited:<br>**EP-A-0 005 916  US-A-2 600 843**<br>**DE-A-2 334 971  US-A-2 829 881**<br>**DE-B-1 231 967  US-A-3 142 598**<br>**FR-A-1 411 011  US-A-3 292 918**<br>**FR-A-1 448 304  US-A-3 493 222**<br>**GB-A-2 041 489  US-A-3 530 212**<br>**US-A-2 052 062  US-A-3 900 357** | (73) Proprietor: **Ford Motor Company**<br>**The American Road**<br>**Dearborn, MI 48121 (US)**<br>㊱ **IT**<br><br>(72) Inventor: **Galaniuk, Alexander H.**<br>**3 Colony Lane**<br>**Dearborn Michigan 48120 (US)**<br>Inventor: **Fesko, Donald George**<br>**16806 Philiomene**<br>**Allen Park Michigan 48101 (US)** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**0 040 531**

**(74)** Representative: **Drakeford, Robert William et al
Ford Motor Company Limited 15/448, Research
& Engineering Centre Laindon
Basildon Essex SS15 6EE (GB)**

# Description

This invention relates to leaf springs and leaves therefor.

Multileaf vehicular springs are disclosed in, for example, U.S. patent specifications Nos. 2052062; 3292918; and 3493222. Moreover, springs comprising leaves which contain filamentary solids in an organic solid are disclosed in for example U.S. patents 2600843; 2829881; and 3142598. US—A—3900357 discloses a leaf spring composed of a plurality of overlying plies of different lengths each composed of directionally oriented filaments in a matrix of curable plastics material. The filaments are generally oriented in the longitudinal direction, but in some plies, the filaments may form cross-plies. US—A—3142598 discloses a spring leaf composed of filaments bound together by a solid matrix of organic plastics material and formed by a filament winding process. The filaments are packed substantially uniformly throughout the plastics material, extend along the length of the spring leaf, and are under slight tensile stress as a result of the winding process.

Although the presence of such filaments contributes to the strength of the leaf springs, we have found that leaf springs still tend to deteriorate relatively quickly in those parts which receive most compressive stress and also suffer from creep.

According to the present invention there is provided a spring leaf comprising a longitudinally extending beam composed of from 40 to 75% by volume of filaments, the remainder comprising a continuous organic solid plastics material that binds together said filaments, at least 80% by weight of said filaments being packed substantially uniformly throughout said organic solid, extending along the beam and being under tensile stress, characterised in that some, but no more than 10% by weight, of said filaments are randomly oriented on a surface of the beam that in use is subjected to compressive loading, and in that some, but no more than 10% by weight, of said filaments are woven and lie in the body of the leaf in a place transverse to the plane in which bending of the beam will normally take place.

By disposing some of the filaments randomly on the surface, and weaving other filaments in the said transverse plane, the resistance of the beam to compressive stress and creep is improved.

In a preferred embodiment of the invention, the leaf comprises a beam with 50—60% by volume filamentary solids and 50—40% by volume of organic solid. In certain embodiments, the beam has a configuration that is substantially straight along a longitudinal axis without flexure, and a cross-section that is preferably substantially rectangular.

This invention also includes a multileaf spring having a first leaf (normally a set of leaves comprising a first leaf) which acts independently of a second leaf under a load up to a predetermined value and a second leaf which is a spring leaf in accordance with the invention. The first leaf acts together with the second leaf under a load which is greater than the predetermined value. The first leaf preferably has ends adaptable to attach the spring to a vehicle at first and second vehicle locations. The second leaf preferably has a centre section bindable with a centre section of the first leaf to the vehicle at a third vehicle location. The third vehicle location is between the first and second vehicle locations.

Embodiments of the invention will now be described, by way of example only, with reference to the drawings, in which:

Figure 1 illustrates schematically the operation of a multirate spring in accordance with this invention. Configurations I, II and III denote spring conditions, somewhat exaggerated for purposes of illustration, under increasingly larger loads.

Figure 2 illustrates graphically spring rates for a multirate spring. The ordinate is load in newtons; the absissa is spring height in millimeters.

Figure 3 illustrates a multirate spring in accordance with this invention.

Figure 4 illustrates a cross-section through the spring of Figure 3 along line II—II of Figure 3.

Figure 5 illustrates a cross-section through the spring of Figure 3 along line from III—III of Figure 3.

Figure 6 is a side view of a spring seat upon which a spring such as in Figure 3 may be mounted.

Figure 7 is an end view of the spring seat of Figure 3.

Figure 8 is a view of the spring seat of Figure 6 from below.

Figure 9 is a schematic cross-section of a spring leaf in accordance with the invention as incorporated in the spring of Figure 4 and illustrating its composition.

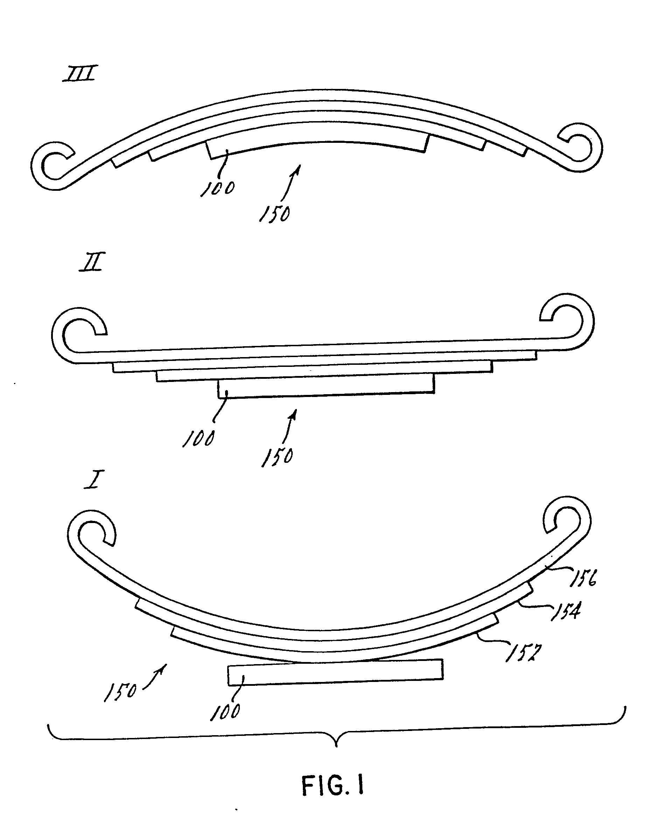

Figure 1 of the drawings schematically illustrates a multileaf, multirate, composite leaf spring 150. The leaf spring 150 has a main leaf 156 and two secondary leaves 152 and 154. The composition of the main and secondary leaves 152, 154 and 156 is steel. The leaf spring 150 additionally incorporates a leaf 100, composed of glass fibres in a solid matrix of thermosetting organic plastics material formed into a straight flat beam.

Configuration I of Figure 1 shows the leaf spring 150 under a new load. The spring 150 conforms to configuration I, when for example, a vehicle carrying it is unloaded, e.g., "curb position". It will be observed that the main and secondary leaves 156, 152 and 154 are bent, whilst the additional leaf 100 remains undeflected.

Configuration III of Figure 1 shows the leaf spring 150 under a high load. The spring 150 conforms to configuration III, when, for example, a vehicle carrying has a capacity load, i.e., "normal load". In this condition all the leaves of the leaf spring 150 are bent. The rating of the spring is therefore higher in this configuration than in configuration I.

Configuration II of Figure 1 shows the leaf spring 150 under a load intermediate between the first and second loads at which the additional leaf 100 is just about to be bent by the load.

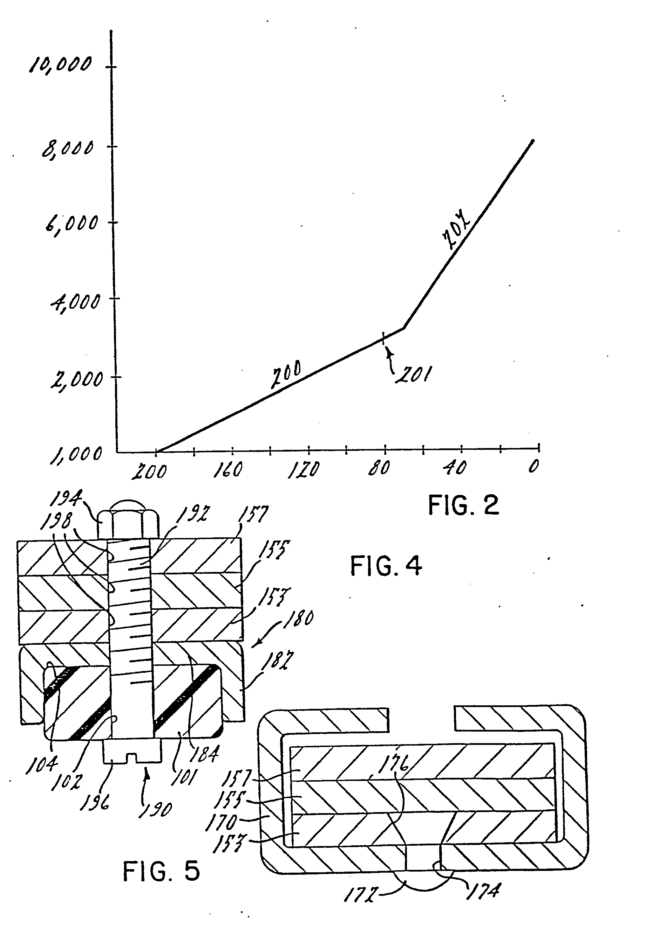

Figure 2 approximates graphically the variation of the deflection of a leaf spring (x axis in mm.) with applied load (y axis in newtons). The deflection measurement corresponds to the overall height of the leaf spring. The measurements were made on the leaf spring 250 illustrated in Figure 3, the leaf spring being unclamped and mounted on rollers during the measurements.

The slope of line 200 corresponds to the rating of the leaf spring when it is in configuration corresponding to that shown at I in Figure 1. The slope of line 202 corresponds to the rating of leaf spring 250 when it is in a configuration corresponding to that shown at III of Figure 1. The intersection of lines 220 and 202 represents a transition between the spring rates which occurs when the leaf spring 250 is in a configuration corresponding to that shown at II in Figure 1. The point 201 indicates the conditions under which the main leaf of the spring 250 lies flat. This occurs at a lower load than the load at which the transition between the spring rates occurs because, unlike the leaf spring 150, the additional leaf 101 is spaced from the other leaves by a spacer 180.

As seen in Figure 3, the leaf spring 250 has a set of steel leaves 153, 155 and 157; leaf 157 being the main leaf. These leaves give the leaf spring 250 the first spring rate. The additional leaf 101 comprises a beam of glass fibres in a matrix of a thermosetting plastics material. The additional leaf 101 in combination with the leaves 153, 155 and 157 produces the second spring rate.

The main leaf 157 has mounting eyes 140 and 160 which comprise integral curvatures 162 and 142 at the ends of the main leaf 157. Each eye 140 and 160 contains a press fitted bush 144 and 164, within which are mounted metal sleeves 146 and 166. In use, the leaf spring 250 is mounted on a vehicle through the sleeves 146 and 166(a) to the chassis or body on either side of the axle or (b) to the axle at spaced locations. One of the sleeves 146 and 166 is mounted to the vehicle for example by a shackle to accommodate relative movement of the ends of the leaf spring during flexing.

A clip 170 holds the leaves 153, 155 and 157 together and towards one end of the spring 250 and prevents excessive splaying of leaves 153, 155 and 157. An additional clip (not shown) may also be provided at the opposite end portion of the leaf spring 250 if desired. In use the clip 170, is positioned forwardly of the axle to which the spring 250 is attached, thus prevents entry of gravel or other particulate between the leaves 153, 155 and 157, particularly during acceleration of the vehicle.

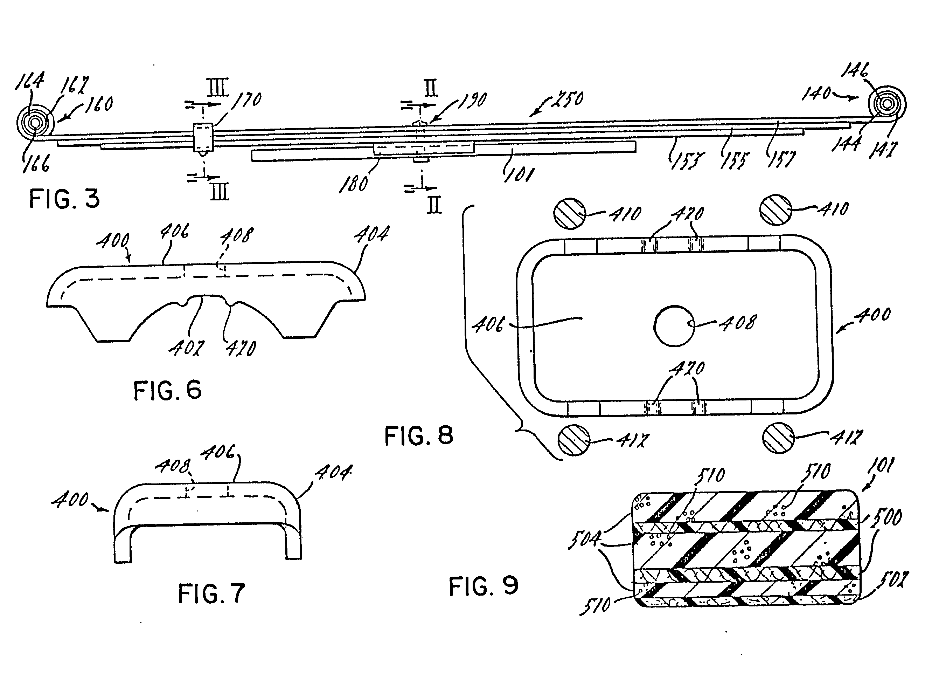

Fastening means 190 extends through the leaves 153, 155, 157 and 101 and permits alignment of the leaf spring 250 in a spring seat 400 (Figures 6, 7 and 8). The fastening means 190 also extends through a spacer 180 (Fig. 4), and delays engagement of leaf 101 beyond "flat main leaf" condition of main leaf 157. The spacer 180 may be composed of aluminum or of any other such formable material.

As best seen in Figure 4, the fastening means 190 comprises a threaded bolt 192 having a cap 196 and a nut 194. The bolt 192 fits snugly in an orifice 198 through the main and secondary leaves 153, 155 and 157 and an orifice 102 through the additional leaf 101. The cap 196 fits into an orifice 408 in the spring seat 400. The spacer 180 (Figure 4) has integral creep resistors 182 that wrap around the additional leaf 101. The leaf 101 has curved edges 104 that fit snugly into the intersection of the spacer portion 184 and the creep resistance portions 182 of the spacer 180. The creep resistance portions 182 of the spacer 180 resist movement of the leaf 101 during flexing of the spring 250.

Figure 5 shows a cross-section through the clip 170. A rivet 172 fit tightly into two orifices 172 and 174 of the clip 176 and the leaf 153, respectively to maintain engagement between the clip 176 and the leaf 153.

Figures 6, 7 and 8 show side views and a bottom view (looking up from the axle) of the spring seat 400. The seat 400 comprises a top, flat portion 406 upon which the leaf spring 250 rides. The flat portion 406 has a width equal or slightly greater than the width of leaf 101 and a length of about two times its width. The seat 400 has an orifice 408 into which the bolt head 196 fits.

The spring seat 400 has a curved portion 402 which conforms to the axle housing (not shown) of the vehicle. The curved portion 402 is interrupted by nubs 420 which, during assembly of the spring 250 on to a vehicle, provide metal by means of which the seat 400 can be welded to the axle housing. The nubs 420, accordingly, disappear during the welding operation.

The spring seat has an external curved section shown at 404 in Figures 6 and 7, which slope away from flat portion 406. The flat portion 406 thus forms a plateau upon which the leaf spring 250 rides, thereby providing a smooth engagement between the spring leaf 101 and the seat 400.

Figure 8 shows sections 410 and 412 of members of U-bolt assemblies of conventional construction which wrap around the axle housing. They engage a single plate above the spring leaf 157.

Figure 9 illustrates a cross-section through the spring leaf 101. The section is substantially rectangular with corners having a small radius. Leaf 101 comprises filamentary solids in a continuous organic solid. Sections 500, 502 and 510 of leaf 101 show the relative positions and character of the filamentary solids in the matrix of thermosetting plastics material 504. Sections 500, 502 and 510 extend the length of leaf 101.

The leaf 101 contains about 54% by volume of filamentary solids which comprise glass fibres; the remainder of leaf 101 is a continuous organic solid plastics material (thermoset polyester resin) that binds the filamentary solids together.

The leaf 101 of Figure 9 has been made by a pultrusion process. In the pultrusion process, pullers draw filaments coated with resin through a heated die. The resin hardens in the die. Examples of pultrusion processes appear in U.S. Patents 4,154,634; 3,853,656; 3,793,108; 3,684,622; 3,674,601; 3,530,212; and 2,741,294.

The leaf 101 of Figure 9 has three arrangements of filaments. Greater than about 95% by weight of the filamentary solids comprise a multitude of discrete, tensilely stressed, filaments densely packed substantially uniformly throughout thermoset polyester 504. These filaments extend along leaf 101 in a plurality of planes which receive tensile or compressive stress upon flexure of multirate spring 250 sufficient to bend the spring leaf 101. The sections through a portion of such filaments appear as 510 in Figure 9. (The sections 510 are slightly enlarged relative to the remainder of leaf 101, and the sections of other of the filaments, substantially uniformly dispersed throughout leaf 101, have been omitted from Figure 9 for clarity.)

Less than about 2% by weight of the filaments in the spring leaf 101 are randomly oriented. The portion 502 in Figure 9 shows the position of these randomly oriented filamentary solids in the spring leaf 101. The randomly oriented solids form a mat (e.g. glass fibre mat) in one surface of the leaf 101. The mat side of leaf 101 rests on spring seat 400 in multirate spring 250 of Figure 3. (The size of the portion 502 is exaggerated for the purpose of illustration, the mat being actually only a few glass fibres thick.)

Less than about 2% by weight of the filamentary solids in leaf 101 comprise a woven mat of filamentary solids which is held tightly within the longitudinally extending filamentary solids. Portions 500 of Figure 9 illustrate positions of the woven mat in leaf 101. The woven mat has filamentary solids positioned across one another and therefore contains fibres that are traverse to the longitudinal dimension of the spring leaf 101. These traverse fibres reduce creep of leaf 101. (The portions 500 exaggerate for purposes of illustration the relative volume taken by the woven mats. Each woven mat in the leaf 101 is compressed such that it has a volume that is from 1 to 10 fibres thick in a cross-section of leaf 101.)

In an alternative embodiment of the invention the spacer creep resistors 182 shown in Figure 4 are omitted. In this embodiment leaf 101 and leaves 153, 155 and 157 have equal widths.

In still other embodiments, leaf 101 is as above described with respect to continuous and filamentary solids, but, when unloaded, is curved. In a multirate spring embodiment, such a curved leaf may engage leaves 153, 155 and 157 before or after the main leaf has been deflected into a flat position depending, for example, on whether leaf 101 has a positive or negative curvature with respect to leaf 157. In still other embodiments, such a curved spring leaf may be included in the main and secondary leaves.

## Claims

1. A spring leaf comprising a longitudinally extending beam (101) composed of from 40 to 75% by volume of filaments (510), the remainder comprising a continuous organic solid plastics material (504) that binds together said filaments, at least 80% by weight of said filaments being packed substantially uniformly throughout said organic solid, extending along the beam and being under tensile stress, characterised in that some, but no more than 10% by weight, of said filaments are randomly oriented on a surface (502) of the beam that in use is subjected to compressive loading, and in that some, but no more than 10% by weight, of said filaments are woven and lie in the body of the leaf in a plane (500) transverse to the plane in which bending of the beam will normally take place.

2. A leaf spring in accordance with Claim 1, wherein the filaments constitute from 50 to 60% by volume of the beam.

3. A spring leaf in accordance with Claim 1 or Claim 2, wherein said beam is made by drawing the filaments and the plastics material through a heated die and allowing the plastics material to harden in the die whilst maintaining the said at least 80% of the filaments under tension.

4. A spring in accordance with any one of Claims 1 to 3, wherein said organic solid plastics material comprises a polyester or a vinyl thermosetting resin.

5. A spring leaf in accordance with any one of Claims 1 to 4, wherein said beam is substantially straight when it is not subjected to bending loads.

6. A spring lead in accordance with any one of Claims 1 to 5, wherein said beam has a substantially rectangular cross-section.

7. A spring leaf in accordance with any one of Claims 1 to 6 wherein the filaments are of glass.

8. A leaf spring comprising a first spring leaf (153, 155, 157) which bends under a load up to a predetermined value, and a spring leaf according to any one of the preceding claims connected to the first spring leaf to bend with the first spring leaf when loads greater than the predetermined value are applied to the spring.

## Patentansprüche

1. Federblatt, umfassend einen sich längs erstreckenden Träger (101), der 40 bis 75 Vol.-% Fasern (510) enthält, wobei der Rest aus einem durchgehenden organischen festen Kunststoff (504) besteht, der diese Fasern aneinander bindet, wobei mindestens 80 Gew.-% dieser Fasern im wesentlichen gleichmässig durch diesen ganzen organischen Feststoff hindurch entlang dem Träger und unter Zugsspannung gepackt sind, dadurch gekennzeichnet, dass diese Fasern zum Teil, aber nicht mehr als 10 Gew.-% auf einer Oberfläche (502) des Trägers, die im Betrieb einer Drucklast unterliegt, statistisch orientiert sind und dass diese Fasern zum Teil, aber nicht mehr als 10 Gew.-% gewebt sind und im Körper des Blatts in einer Ebene (500) liegen, die senkrecht zu der Ebene steht, in der Biegen des Trägers normalerweise erfolgt.

2. Blattfeder nach Anspruch 1, worin die Fasern 50 bis 60 Vol.-% des Trägers ausmachen.

3. Federblatt nach Anspruch 1 oder 2, worin dieser Träger dadurch hergestellt wird, dass man die Fasern und den Kunststoff durch eine erhitzte Düse zieht und den Kunststoff in der Düse härten lässt, während man besagte mindestens 80 % der Fasern unter Spannung hält.

4. Feder nach einem der Ansprüche 1 bis 3, worin dieser organische feste Kunststoff aus einem Polyester oder heisshärtenden Vinylharz besteht.

5. Federblatt nach einem der Ansprüche 1 bis 4, worin dieser Träger weitgehend gerade ist, wenn er keinen Biegelasten unterliegt.

6. Federblatt nach einem der Ansprüche 1 bis 5, worin dieser Träger einen im wesentlichen rechteckigen Querschnitt aufweist.

7. Federblatt nach einem der Ansprüche 1 bis 6, worin die Fasern aus Glas bestehen.

8. Blattfeder, umfassend ein erstes Federblatt (153, 155, 157), das sich unter einer Last bis zu einem vorbestimmten Wert biegt, und ein Federblatt nach einem der vorhergehenden Ansprüche, das mit dem ersten Federblatt so verbunden ist, dass es sich mit diesem biegt, wenn die Feder mit mehr als dem vorbestimmten Wert belastet wird.

## Revendications

1. Lame de ressort comprenant une barre longitudinale (101) faite de 40 à 75% en volume de filaments (510), le reste étant constitué par une matière plastique solide organique continue (504) qui agglomère les filaments, au moins 80% en poids des filaments étant tassés en substance uniformément dans la totalité de la matière solide organique, s'étendant le long de la barre et étant soumis à une contrainte de traction, caractérisée en ce que les filaments d'une certaine fraction, qui ne dépasse pas 10% en poids, sont orientés de manière statistique sur une surface (502) de la barre qui, en service, est soumise à une charge de compression et les filaments d'une certaine fraction, qui ne dépasse pas 10% en poids, sont tissés et sont disposés dans le corps de la lame dans un plan (500) transversal au plan dans lequel la flexion de la barre doit normalement se produire.

2. Lame de ressort suivant la revendication 1, dans laquelle les filaments constituent 50 à 60% en volume de la barre.

3. Lame de ressort suivant la revendication 1 ou 2, dans laquelle la barre est formée par étirage des filaments et de la matière plastique à travers une filière chauffée et par durcissement de la matière plastique dans la filière alors que les dits filaments représentant au moins 80% sont maintenus sous tension.

4. Ressort suivant l'une quelconque des revendications 1 à 3, dans lequel la matière plastique solide organique est un polyester ou une résine vinylique thermodurcissable.

5. Lame de ressort suivant l'une quelconque des revendications 1 à 4, dans laquelle la barre est en substance droite lorsqu'elle n'est pas soumise à des charges de flexion.

6. Lame de ressort suivant l'une quelconque des revendications 1 à 5, dans laquelle la barre a une section en substance rectangulaire.

7. Lame de ressort suivant l'une quelconque des revendications 1 à 6, dans laquelle les filaments sont en verre.

8. Ressort à lames comprenant une première lame de ressort (153, 155, 157), qui, sous l'effet d'une charge, fléchit jusqu'à une valeur de flexion prédéterminée, et une lame de ressort suivant l'une quelconque des revendications précédentes reliée à la première lame de ressort pour fléchir en compagnie de cette première lame de ressort lorsque des charges supérieures à la valeur prédéterminée sont exercées sur le ressort.

FIG. I

FIG. 2

FIG. 4

FIG. 5

FIG. 3

FIG. 6

FIG. 7

FIG. 8

FIG. 9

0040 531